# EUROPEAN PATENT SPECIFICATION

(11) **EP 1 476 739 B1**
(45) Date of publication and mention of the grant of the patent: **12.11.2008**
(21) Application number: 01980455.8
(22) Date of filing: 28.09.2001
(51) Int. Cl.: G01N 1/30

(54) **TISSUE FIXATIVE COMPOSITION**
GEWEBEFIXATIVZUSAMMENSETZUNG
COMPOSITION POUR LA FIXATION DE TISSUS

(43) Date of publication of application: 17.11.2004
(73) Proprietor: DCS Innovative Diagnostik Systeme Dr. Christian Sartori GmbH & Co. KG, 22397 Hamburg (DE)
(72) Inventor: Olert, Jurgen, 55101 Mainz (DE)
(74) Representative: Stüven, Ralf
(86) International application number: PCT/EP2001/011302
(87) International publication number: WO 2003/029783

(56) References cited:
- WO-A-00/55173
- WO-A-97/33978
- DE-A- 10 021 390
- US-A- 5 260 204
- WIEDORN K H ET AL: ""HOPE": A new fixing technique for human tissues and its application in molecular pathology." PATHOLOGY RESEARCH AND PRACTICE, vol. 197, no. 5, 2001, page 287 XP008003813 85th Meeting of the German Society of Pathology;Muenster, Germany; June 06-09, 2001 ISSN: 0344-0338
- OLERT JUERGEN ET AL: "HOPE fixation: A novel fixing method and paraffin-embedding technique for human soft tissues." PATHOLOGY RESEARCH AND PRACTICE, vol. 197, no. 12, 2001, pages 823-826, XP008003849 ISSN: 0344-0338

## Description

### Field of the Invention

The invention concerns a protective solution, the preparation of a protective solution and a fixation method. In particular the invention concerns preparations for the protection of biological samples for histological, histochemical, immunohistochemical and molecular genetic use with a new type of protective solution which preserves the structure very well on the one hand and guarantees long-lasting preservation on the other hand due to the embedding in paraffin.

### Background to the Invention

Wiedorn et al published an abstract in October 2000 in the Electronic Journal of Pathology [Study Group:Molecular Pathology, Abstract No.1] directed to a tissue fixation technique involving an unspecified protection solution composed of several amino acids and glucose together with an organic buffer. Goldmann et al showed the efficacy of this technique in Abstract No. 2 of the same publication.

DE 692 21 550 T2 concerns a staining method using an acidic stain for the detection of protein fragments separated by electrophoresis.

WO 92/19951 A1 concerns a tissue fixative containing, for example, diazolidinyl urea, in which the fixative is free from aldehydes and toxic chemicals.

EP 0 214 613 A2 describes a method and a composition for the determination of a leukocyte-differential blood count, in which the composition contains formaldehyde or paraformaldehyde.

DE-A--40 39 716 A1 describes a method for the preparation of tissue samples.

US-5,679,333 describes a formaldehyde-free tissue preservative agent containing an aqueous solution of ethanol, ethanedial, a polymer and a polar aprotic solvent.

US-5,453,381 describes a method of fixing faecal samples to specimen slides.

US-5,532,168 concerns a device and a method to accelerate and simplify the transfer of tissue biopsy samples.

US-4,971,783 concerns a tissue preparation for immunofluorescence microscopy.

US-3,892, 197 describes apparatus for light microscopy.

DE 10021390 A1, an application by the inventor of the present invention filed prior to but published after the filing of the present application, concerns the protection solution described herein.

WO 97/33978, WO 00/55173 and US 5,260,204 describe media containing e.g. amino acids and glucose, but do not relate to a protection solution.

The primary aim of any fixation of biological material is the optimal and long-term preservation of its structures, which are relevant in the microscopic presentation of specific morphological detail. This is achieved either by the use of denaturing or protein-precipitating agents such as for example acids, metal salts, alcohols, ketones or other organic solvents or their combinations, or by the use of protein cross-linking substances such as for example pentan-1,5-dial (glutaraldehyde), methanal (formaldehyde) or combinations of these with the previously named agents. Formaldehyde as a circa 10% aqueous solution (formalin) is the fixative most used in histology, because in routine clinical diagnostics it offers the best possible compromise between a simple and a reliable method as well as extremely good structural preservation.

The strong cross-linking action of formaldehyde is essential, to protect the tissue from the aggressive effects of concentrated solvents in the course of fixation and embedding in paraffin, these solvents being unavoidable in the next step of the fixation process, to ensure complete dehydration of a sample prior to embedding in water-free paraffin.

In the state of the art various methods have been proposed in which dehydration with solvents is achieved without prior protein cross-linking (F.-J. Medina et al, Histochemistry 103 (1995), pages 403 to 413; G.B. Marit et al., Histotechnology 18 (1995), pages 111 to 114; US 5,432, 056). Such fixation of biological materials does appear possible in principle and is also simple, but because of the unpredictable destructive effects on morphological structures such as the nucleus or cytoplasm it is little used, and then mainly on very small pieces of tissue such as biopsies or excised samples (cf. Edna B. Prophet, Bob Mills, Jacquelyn B. Arrington, Leslie H. Sobin (Ed.): Laboratory Methods in Histotechnology, Washington, D.C., 1992).

Although formaldehyde is very useable in histology thanks to its very good preservation of tissue structure, most recently the development of molecular biological methods has increased the demands on tissue fixation. The use of formaldehyde-fixed biological samples has exhibited a series of disadvantages in the practice of immunohistochemical and molecular genetic methods, as the cross-linking effect of formaldehyde, which was desirable for stabilisation of the morphology, was a disadvantage in the immediate investigation of protein structures. The detection of tissue antigen by means of specific antibodies can thus be hindered or even impossible due to effect of protein cross-linking agents such as formaldehyde, if the antigen structure determinant (epitope) has been masked or transformed by cross-linking. Formaldehyde-induced protein cross-linking has also been noted in the in-situ hybridisation and isolation of various RNA species.

To overcome these problems, various state-of-the-art methods have been proposed such as for example digestion of the tissue section by proteolytic enzymes or microwave pre-treatment of the tissue. Nonetheless there is still a series of tissue antigens which can only be reliably determined by cryostat-sectioning or cell smear. The cryostat-sectioning technique is however technically demanding and long-term sample storage is problematic. In addition sectioning of frozen tissue does not always deliver satisfactory morphological quality.

The invention therefore concerns the fixation of biological samples in such a way that the problems described above do not occur, using a method considered to be simple.

This is explained by the subject-matter of the patent claims.

In particular, the invention concerns a method of fixation of biological samples, in which the untreated biological sample undergoes pre-treatment in such a way that the immediate addition of dehydrating solvents is possible. Use of this method enables uncomplicated long-term storage and the fixed samples are preserved in such a way that the essential characteristics of their morphological detail correspond to those of a section fixed in formaldehyde.

The invention also concerns a protective solution, which inhibits the destructive effects of organic solvents to the greatest extent or completely.

Other advantageous aspects, forms and details of the present invention are described in the appended patent claims, the description and the attached figures.

### Summary of the Invention

The invention provides a protective solution for use in a fixation method for the paraffin section technique, comprising (i) exclusively the amino acid glycine, L-alanine, L-proline, L-serine and L-glutamic acid, wherein each amino acid is present at a concentration of 10 to 100 mM, (ii) at least one sugar compound, wherein the at least one sugar compound is chosen from among D-glucose, D-galactose or D-mannose, and (iii) water, the protective solution having a pH of between 5.8 and 6.8 at 20°C.

It can also be an advantage, if the protective solution is pH-buffered and the correct pH is readable with a pH-indicator, e. g. phenol red. Such buffering can be achieved by the use for example of HEPES and/or imidazole buffers in appropriate concentrations.

To improve the shelf-life of the protective solutions, they can contain a preservative, for example sodium azide.

Fundamentally, the protective solution according to the invention requires the addition of absolutely none of the usual salts. Since a preservative as for example sodium azide is appropriate, a small proportion of salts is acceptable. Thus it is at least recommended that the protection solution contains less than 0.05 g salt per 100 ml solution.

To fundamentally obviate the protein cross-linking activity of aldehydes, it is further recommended that the protection solution contains no aldehydes.

Particularly preferable is a protective solution which contains per 100 ml: 75-85 mM glycine, 40-50 mM L-alanine, 12-22 mM L-proline, 33-43 mM L-serine, 63-73 mM L-glutamic acid, 15-19 mM HEPES, 71-75 mM imidazole, 25-35 mM D-glucose, 3-9 mM sodium azide and 0.005 g phenol red in aqueous solution with a pH value of 6.0 to 6.4 at 20°C. A very particularly preferably protective solution according to the invention contains 0.6 g glycine (80 mM), 0.4 g L-alanine (45 mM), 0.2 g L-prolin (17 mM), 0.4 g L-serine (38 mM), 1.0 L-glutamic acid (68 mM), 0.4 g HEPES-buffer (17 mM), 0.6 g D-glucose (30 mM), 0.5 g imidazole (73 mM), 0.05 g sodium azide (7.7 mM) and 0.005 g phenol red/100 ml in aqueous solution.

The invention further concerns a preparation that contains a specific quantity of solids as essential substances. Such a preparation can preferably be a tablet. In a tablet the required components are compressed together. Prior to use the tablet is dissolved in a defined volume of water and is thus very easy to use.

The invention further concerns a fixative kit that contains at least: at least one preparation of the predetermined amount of the solid substances required for the protective solution and a further solution that contains at least one appropriate solvent for fixation. The further solution consists of or contains acetone.

The invention finally also concerns a fixation method for biological samples involving the following steps:
- Incubation of a biological sample with the protective solution according to the invention; and
- subsequent incubation of the biological sample with a further solution consisting of or containing acetone.

The biological samples in terms of the present invention are materials consisting of any cells and or extracellular organic material, in particular tissues. Both animal and plant tissues are involved as appropriate biological samples. The tissue can derive from any animal including the human as well as any plants, fungi etc. It can derive from or consist of organs, skin, blood etc. Preferably they consist of biopsy material, surgical material, autopsy material, body fluids.

Incubation in terms of the present invention means that the complete biological sample for fixation is placed in the incubation solution, hence preferably surrounded by the solution on all sides or at least all parts of the biological sample are able to come into contact sufficiently with the solution.

Preferably the fixation method includes the following step:
- Embedding of the treated biological sample in paraffin.

The embedding in paraffin achieves good further preservation as well as facilitating final sectioning of thin layers of tissue.

Preferably incubation with the protective solution takes place for at least five hours. Incubation with the protective solution can be carried out over 8 to 100 hours, preferably 10 to 20 hours. It is further recommended that incubation take place at a low temperature. A recommended appropriate temperature for incubation in the presence of both the protection solution and the further solution is 0°C to 4°C. Incubation with the further solution preferably lasts for 1 to 10 hours. The actual addition of the further solution can be carried out either by removing the biological sample from the protection solution or by separating off the protection solution from the sample in some other way and then the further solution added or the sample is laid in the further solution. Preferably the further solution will be ice-cold to keep the biological sample at an appropriately low temperature.

Incubation with the further solution can take place in several steps with the further solution being changed as required. In this way it can be reliably ensured that the protective solution according to the invention is gradually precipitated out by the diffusing further solution and at the same time the biological sample is drained of all but the required residues.

The further solution contains acetone or consists of acetone and preferably can contain a small amount of glyoxal.

The biological sample, for example a piece of tissue, is brought into contact with the protective solution according to the invention, whereby the protective solution according to the invention diffuses into the tissue sample in the style of immersion fixation and thus the destructive effects of the organic solvents added finally is inhibited to the greatest possible extent or even completely.

The whole method is so designed that in the second step the diffusing solvent in the form of the further solution partially precipitates out the protective solution and at the same time filters out the tissue leaving the required residues. The dehydration achieved by the further solution and reversible protein precipitation occur in parallel, without any strong denaturing, which is particularly important in preserving sensitive antigen structures. An additional important effect of the protective solution is that as it penetrates it opens up capillary spaces whereby it penetrates the biological sample more quickly than usual.

Finally the dehydrated biological sample is added directly to low-melting-point paraffin (melting point 52°C to 54°C). As the paraffin penetrates the residues of the protective solution according to the invention again act as a protective factor against the paraffin acting as a solvent and at the same time the acetone found in the further solution is drained out of the tissue. The embedding in paraffin at 55-65°C takes preferably between 2 and 18 hours. The further preparation of the tissue section is performed in the usual way known to the expert, for example as described in: Edna B. Prophet, Bob Mills, Jacquelyn B. Arrington, Leslie H. Sobin (Ed.): Laboratory Methods in Histotechnology, Washington, D.C., 1992).

The protective solution according to the invention and the fixation method according to the solution enable protective fixation of biological material, so that even after embedding in paraffin antigen structures are still preserved to the greatest extent. This is also true in the case of the preservation of nucleic acids such as for example DNA and RNA. Additionally an acceptable morphological representation of most the structural details relevant in pathological diagnosis is ensured. A great advantage of the method according to the invention is that RNA or DNA diagnosis can still be carried out on the tissue samples after fixation, so that various investigations can be carried out on a single object. The tissue samples fixed according to the invention keep well, at least for months. The protective solution according to the invention (HOPE = Hepes-glutamic acid buffer-mediated Organic Solvent Protection Effect) is particularly suited to small-sized tissue samples.

### Description of the Drawings

The invention is further described below by means of actual examples that the attached figures illustrate, in which the following is represented:

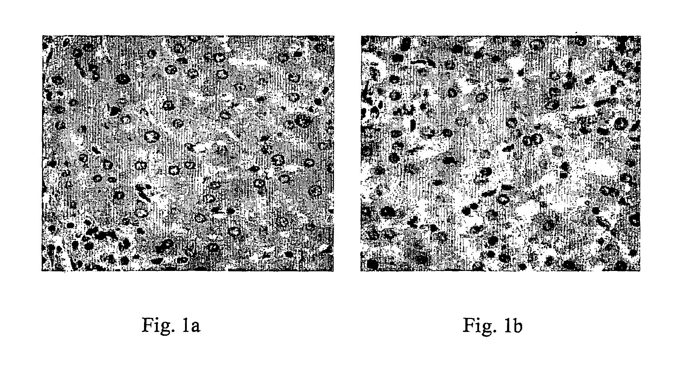

Figure 1 a & b is a comparison of liver tissue fixed with formalin (a) and fixed according to the invention (b), both tissues being HE-stained.

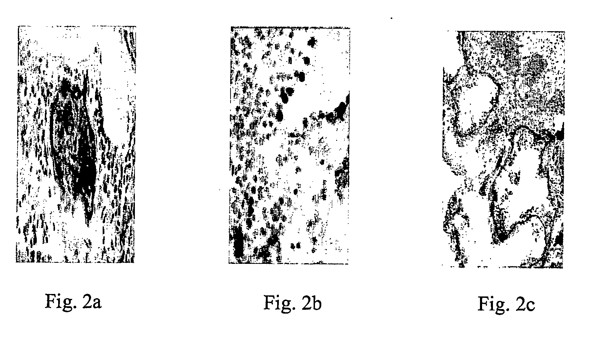

Figures 2 a, b & c show examples, after fixation according to the invention, of immunohistochemical detection with antibodies of cryo-type (ex DAKO, Hamburg) where the LSAB (= Labelled Streptavidin-Biotin) with alkaline phosphatase and new fuchsin technique was used. The figures show endothelial tissue from the appendix with E-Selectin (a), VCAM (b) and ICAM (c) detection.

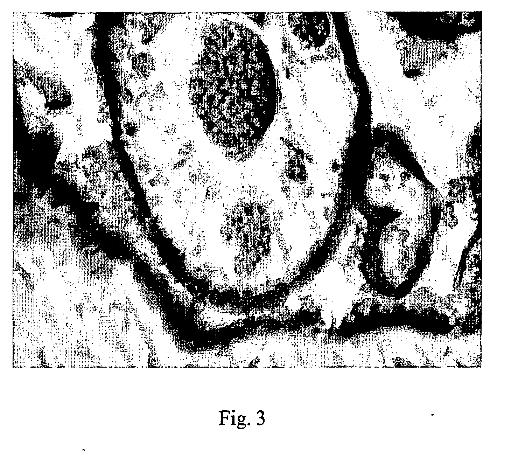

Figure 3 shows an enzyme histochemical demonstration of alkaline phosphatase activity within the trophoblast region of placental tissue fixed according to the invention (Naphtol AS-Bi phosphate ex Sigma, Deisenhofen, Germany, new fuchsin)

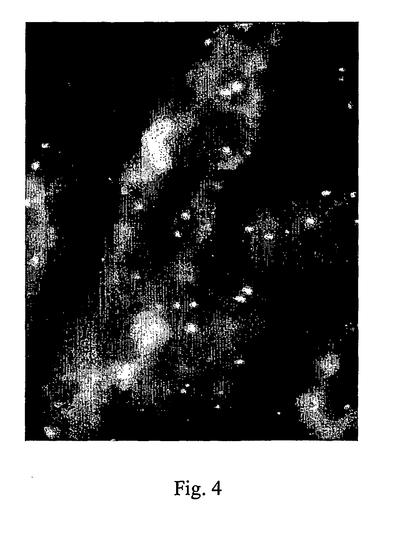

Figure 4 shows an example of DNA - in situ hybridisation after the fixation described above. The figure shows kidney tissue after labelling with a probe for chromosome 9 (classical satellite, Biotin/FITC, green signal) (ex Oncor) and counterstaining with propidiumiodide.

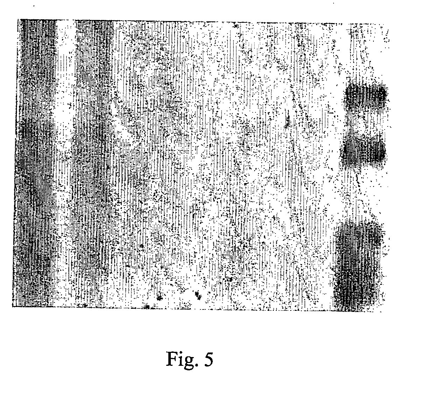

Figure 5 shows a formaldehyde agarose gel demonstrating that sufficient amounts of RNA could only be extracted from tissue fixed according to the invention but not from formalin-fixed tissue: Lane 1 and 2 from three 5 µm sections of tissue after the fixation above (spleen and placenta), Lane 3 and 4 from three 5 µm sections of formalin-fixed tissue (spleen and placenta), Lane 5 and 6 from one 5µm section of spleen and placenta fixed according to the invention and Lane 7 RNA exhibits the molecular weight marker (from top to bottom: 7.3, 5.3, 2.8, 1.9, 1.6, 1.0, 0.6, 0.4, 0.3 kb).

### Detailed Description of the Invention

### Example 1: Production of a protective solution

For 100 ml of a protection solution the following are used: 0.6 g glycine, 0.4 g L-alanine, 0.2 g L-proline, 0.4 g L-serine, 1.0 L-glutamic acid, 0.4 g HEPES-buffer, 0.6 g D-glucose, 0.5 g imidazole, 0.05 g sodium azide and 0.005 g phenol red. The protection is produced by weighing the individual ingredients and adding water to make up to volume (here: 100 ml) and the pH value is checked. The solution obtained is stirred for one hour at 60°C, filtered and the pH again checked. The substances required can be obtained from appropriate suppliers, for example Sigma, Deisenhofen, Germany. The pH-value of the protective solution should lie at from 6.0 to 6.4 at 20°C, the osmolarity at ca. 390 mOsm/kgH₂O.

### Example 2: Fixing a tissue sample

As early as possible after removal, the tissue sample for investigation is stored at 4°C, preferably in a plastic petri dish, protected from drying out. It is important not to store the sample in physiological saline solution. The tissue can be cut into pieces of a maximum section length of 10 mm and 3 mm thick and added to standard cassettes. To provide the conditions for diffusion, it is preferable to use only sections of organs and not encapsulated organs.

If deep-frozen tissues are involved, these should not be allowed to thaw but are laid in the protection solution while still frozen. The cassettes are placed in ice-cold protective solution according to Example 1; for example in Hellendahl jars which have space for to three cassettes. Incubation then follows at refrigerator temperature (as close to 0°C as possible) for at least 12 and at most 18 hours, though in exceptional cases longer incubation times of up to three days are possible. The colour of the protective solution, as long as phenol red is used as indicator, should remain golden-orange for the duration, to ensure a stable pH value. After incubation the cassettes are removed from the bath with tapered forceps and thoroughly dried in filter paper several times. Care must be taken that no infection from the tissue occurs during this process, hence appropriate protective measures must be taken (surgical gloves). The dried cassettes are placed in a new jar filled with ice-cold acetone (0-4°C) extemporaneously well-mixed with 100 µl glyoxal solution and immediately re-incubated in the refrigerator. If an explosion-proof refrigerator is not available, incubation can proceed in a fume cupboard in ice-cold water (ca. 0°C). [The glyoxal solution is produced by stirring 0.1 g glyoxal, for example Sigma G-5754, in 20 ml protective solution at ca. 80°C for ca. 30 minutes until a clear, light-brown solution is obtained. Then the glyoxal solution is cooled and stored in a refrigerator until mixed with the acetone (the addition of glyoxal to the acetone inhibits a stronger outflow of precipitated protection-solution from the tissue). It must be noted that proteolytic enzymes may also still be active.

The above-mentioned incubation of the tissue sample in acetone/glyoxal lasts ca. 2 hours. Any whitish precipitate observed should be considered normal. Then the cassette with the tissue sample is removed, briefly dried once between filter paper and immediately placed in a fresh jar containing ice-cold acetone. Incubation for a further two hours. The acetone is replaced twice, with incubation taking 2 hours at each stage. After the final incubation, the cassettes are briefly dried once, again taking care that the material theoretically could still be infectious, and immediately in transferred to an individual, disposable weighing dish (ca. 80 x 80 mm and ca. 20 mm high) filled with pure paraffin (low-melting at 52-54°C without additive, e.g. MEDITE Tissuewax) and placed in an incubator at ca. 55°C. While transferring, care should be taken that any air bubbles are able to escape.

Next morning, paraffining is complete. The tissue samples are placed in the normal manner on a hot plate and embedded in a fresh supply of paraffin while air bubbles are again avoided. The embedded biological samples are immediately re-cooled over ice. As with conventional routine embedding, fissures can occur in fresh blocks since absolutely pure paraffin is used. The finished blocks can be stored in a refrigerator until sectioning.

### Example 3: Production of sections after fixation

The paraffin blocks stored in the refrigerator with previously fixed tissue are sectioned by the use of a standard microtome. Flattening of sections is performed on water of room temperature (for other than immunohistochemical uses) or on an ice-cold 4% aqueous solution of polyethylene glycol (e.g. Sigma P 3015) (especially for immunohistochemical uses) in a conventional way. Then the sections are allowed to dry in an incubator at 50°C for ca. 30 minutes. For the removal of paraffin from the sections, the slides are placed flat on a hotplate at 60°C for 2 minutes (for immunohistochemistry: 10 minutes on a 80°C hotplate, to block any endogenous enzymatic activity by alkaline phosphatase or peroxidase). After incubation, the slides are placed in a cuvette containing 56-60°C warm isopropanol. After 2 minutes' incubation time, the slides are thoroughly washed in a second cuvette with 56-60°C warm isopropanol and the isopropanol is then drained and the slides allowed to air-dry. The now paraffin-free sections can also be stored in the refrigerator at this stage but has a slightly greater tendency for water uptake. If other solvents are used for paraffin removal such as for example xylol, chloroform, etc., epitope damage is possible so the use of isopropanol is recommended.

For rehydration the sections are finally incubated for at least 20 minutes in 70% ice-cooled acetone in a refrigerator. Then the slides are removed, allowed to drain for ca. 5 seconds on filter paper and then (still damp) washed in a cuvette with ice-cold distilled water and incubated in a further cuvette with Aqua dest. for 10 minutes. The water is then allowed to drain, the underside of the slides wiped with filter paper and the slides laid on a hotplate at 45°C until all the water has evaporated and the slides have dried (about 1 to 2 minutes).

The sections so obtained can be used in various ways. For example various staining techniques can be used to develop specific morphological structures. The sections can be treated with antibodies to detect the presence of specific antigens or they can be used for in-situ hybridisation. Nucleic acids can also be obtained from the sections and single nuclei can be dissolved out of the cells using appropriate microdissection techniques. Where the sections are used for immunohistochemistry the sections should be as dry as possible prior to coating with the first antibody solution. Complicated blocking techniques need not be used as a rule. Antibodies and enzyme conjugates should only be dissolved in PBS or TBS. Antibody dilutions are used in the same way as with freeze-fracture sections. In in-situ hybridisation, complicated blocking techniques need not be used as a rule. If possible, no SDS should be used in the hybridisation mixture.

### Example 4: HE-staining

For HE-staining, the rehydrated sections are placed in a Haematoxylin solution (e.g. Mayer's haemalum solution) for 2 to 4 minutes. Then in a first cuvette they are intensively rinsed with distilled water and placed in a second cuvette again containing distilled water. Under running tapwater, the sections are allowed to blue for ca. 1 to 2 minutes. In the eosin stain solution a stain is then produced in 2 to 4 minutes depending on intensity. Then they are washed twice with distilled water. Then the slides are briefly immersed in 70% alcohol, for example isopropanol and then immersed twice in absolute alcohol and finally in a third cuvette they are again immersed for 10 minutes in absolute alcohol. Then the sections are rinsed in a cuvette with xylol, incubated in a further cuvette with xylol for 5 minutes at room temperature and after being allowed to drip briefly they are covered with a cover slip.

### Example 5: Preparation for DNA/RNA-Isolation after fixation.

Using tapered forceps, the sections are placed in a 10-ml conical centrifuge tube. At 65°C to 70°C, 4 ml warm isopropanol is added and thoroughly shaken on a reagent glass shaker for ca. 30 seconds with brief pauses. The centrifuge tube is then centrifuged at 3000 rpm for 5 minutes. By the temperature loss in the centrifuge the previously dissolved paraffin may have precipitated out after centrifugation as evidenced by a whitish upper layer of the precipitate. In this event, the tube can be incubated for 10 minutes at 65°C. The clear isopropanol will be carefully decanted and liquid in the centrifuge tube allowed to drain completely. The treatment with warm isopropanol, centrifugation and decanting will then be repeated twice.

After finally decanting, 4 ml ice-cold 70% acetone are added, the centrifuge tube is shaken several times with a reagent tube shaker and incubated for 10 minutes in the refrigerator. Finally as much as possible of the supernatant is pipetted off using a Pasteur pipette. Addition of ice-cold acetone and the subsequent steps are repeated once.

Finally 4 ml ice-cold 50% acetone are added by pipette to the tube, this is shaken and incubated for 10 minutes in the refrigerator.. After brief shaking, centrifugation and decanting as described above, in general the material can be completely drained without rinsing. The tube is shaken, immediately centrifuged, drained and finally immediately filled with distilled water and then again left to stand in the refrigerator for 10 minutes. The tube is finally again centrifuged, decanted and an appropriate ice-cold buffer solution added.

The tissue sample can either be deep-frozen at -85°C or in nitrogen or immediate conventional DNA- or RNA-extraction, as with fresh tissue, can be undertaken.

The DNA extraction may be performed using a number of different methods so as to find out the method of choice. These methods include Wiedorn et al. (Wiedorn, K.H., Kühl,H., Galle, J., Caselitz, J., Vollmer, E. Comparison of in-situ hybridization, direct and indirect in-situ PCR as well as tyramide signal amplification for the detection of HPV. Histochem Cell Biol (1999) 111:89-95) or using the E.Z.N.A Tissue DNA Kit II (peqlab Biotechnologie GmbH, Erlangen, Germany) or the GenoM-48 Robotor applying magnetic beads (Genovision, Olso, Norway), to mention only some of the tested methods. Methods were adopted to work sufficiently with HOPE fixed tissues according to the present invention.

RNA extraction was done according to the RNeasy Mini protocol (Qiagen, Hilden, Germany) or RNAzolB protocol (Campro Scientific, Emmerich, Germany) (P. Chormcznski, N. Sacchi, Anal. Biochem. 162, 156-159 (1987)).

Analysis for showing the molecular weight was done using agarose gels stained with Ethidium Bromide for DNA and formaldehyde agarose gels stained with GelStar (Biozyme, Germany) for RNA. Furthermore solution phase PCR and RT-PCR were performed to ensure the possiblity of downstream investigations on nucleic acids extracted from fixed tissues according to the invention.

### Example 6: Comparative tests on further amino acids.

A number of test series on tissue specimens (human spleen, liver) served to examine further amino acids (i.e. apart from glycine, alanine, serine, proline and glutamic acid set out above in the preferred protection solution). Other substances which are not amino acids chemically were also examined, concerning their aptitude to be employed within a protection solution. In this context, several criteria had to be met:
- Criterion 1: Durability of the complete protection solution in a physico-chemical sense for months, if not years, in a non-frozen state at a required temperature of 0°C to 5°C. This is assesed by measurement and control of controlled physical parameters of the protection-solution (pH, osmolarity, colour, absence of precipitations, odor). For instance, all Sulphur-containg amino acids tested developed a bad odor after a few days.
- Criterion 2: Maintaining the function (protection) constant for the entire time span mentioned above. This is assessed by testing the efficacy of the same batch of a given composition of protection-solution over a time span of twelve months by control of morphological parameters as explained for the criterion 3.
- Criterion 3: Establishing the protective effect by way of intermediary integration into the tissue structures of the specimen to be fixated within a 12-hour time period at low temperatures. This is assessed by empiric quality control of different morphological details of HE-stained sections (f.i. preservation of nuclei, cytoplasm, intermediary filaments). Most important for a critical evaluation was the fact, that shrinkage of morphological details, especially of nuclei, was in no case acceptable.
- Criterion 4: Avoiding the formation of chemical bindings during the process of establishing a protective effect against the solvents which which could stop the paraffin from penetrating the tissue. As a result, the specimens would be insufficiently paraffin-saturated. This was also required for a longer incubation of the tissue specimens (for up to 64 hours). Due to a stronger chemical reactivity of some amino acids, perhaps based on partial bindings to tissue components, the complete outflow of the precipitated protection-solution was often hindered. In consequence the penetration of paraffin was unsatisfactory and sectioning was impossible.
- Criterion 5: "Complexing" the sugar component of the protection solution in such a manner that it can be deposited in the tissue specimen for the protection of nucleic acids without being removed from the tissue too quickly when the dehydrating solvent penetrates. If the "amino acid-sugar-complex" was too labile, its deposition in intermediary capillaries of the tissue specimens over the whole time of dehydration and paraffinization was often insufficient, thus resulting in a bad quality of extracted nucleic acids (DNA and RNA). Therefore quality and amount of the extracted nucleic acids was tested.
- Criterion 6: Satisfying all conditions of the dynamics of the fixation process in order to guarantee optimal sectioning of the tissue in the following histology. That means that it must enable precipitation and partial diffusion when the dehydrating solvent penetrates, but complete outflow of the residues needed for protection after the penetration of the paraffin. Problems in penetration and outflow (of protection-solution, dehydrating agent and/or paraffin) resulted regularly in insufficient dehydrated specimens and as consequence not thoroughly fixed sections. Such sections mostly showed weak staining, empirically demonstrable by use of the routine HE-staining.

The following amino acids were tested for their aptitude for a protection solution according to the above mentioned criteria:
L-glutamine as another representative of the group of acidic amino acids.
L-lysine and L-arginine as representatives of alkaline amino acids.
L-cysteine from the group of S-containing amino acids.
L-phenylalanine and L-tyrosine representing the aromatic amino acids.
L-histidine for the group of heterocyclic amino acids.

The following table shows all the results of the test series concerning their aptitude for a protection solution:

| Amino acids tested | Negative results for protection with respect to the criteria explained | | | | | |
|---|---|---|---|---|---|---|
| (all as L-type) | 1 | 2 | 3 | 4 | 5 | 6 |
| Arginine | | | | | | **x** |
| Cysteine | **x** | | | | **x** | **x** |
| Glutamine | | | | **x** | | |
| Histidine | | | | **x** | **x** | **x** |
| Lysine | | | | | | **x** |
| Phenylalanine | **x** | **x** | | **x** | | |
| Tyrosine | **x** | **x** | | **x** | | |

After the completion of the test series it can be determined that the amino acid composition of the protection solution according to the invention is a combination offering the best basis for the optimal conservation of all tissue components (proteins, nucleic acids) after the reaction with dehydrating solvents and embedding in paraffin. The following substances (which are not amino acids) were also tested for a possible adjuvant effect:
Dimethyl sulfoxide (DMSO)
Citric acid
Propylene glycol
Glycolic acid
Polyvinyl alcohol(PVA)
Polyvinyl pyrrolidone (PVP)
Gelatine
Urea
Tween 20
EDTA(Sodium salt)
Bovine serum albumine (BSA)
Tris (buffer)

## Claims

1. Protective solution for use in a fixation method for the paraffin section technique comprising
(i) exclusively the amino acids glycine, L-alanine, L-proline, L-serine and L-glutamic acid, wherein each amino acid is present at a concentration of 10 to 100 mM
(ii) at least one sugar compound, wherein the at least one sugar compound is chosen from among D-glucose, D-galactose or D-mannose, and
(iii) water,
the protective solution having a pH of between 5.8 and 6.8 at 20°C.

2. Protective solution according to claim 1, further comprising
(iv) a pH-buffering substance and a pH-indicator, and/or
(v) a preservative.

3. Protective solution according to claim 1 or 2, wherein the pH is 6,0 to 6,4.

4. Protective solution according to claim 2, which contains HEPES and/or imidazole as a buffering substance.

5. Protective solution according to one of claims 2 to 4, wherein the pH-indicator is phenol red.

6. Protective solution according to one of claims 2 to 5, which contains sodium azide as a preservative.

7. Protective solution according to one of the preceding claims, containing 25-35 mM Glucose.

8. Protective solutionaccording to claim 7, composed of 75-85 mM glycine, 40-50 mM L-alanine, 12-22 mM L-proline, 33-43 mM L-serine, 63-73 mM L-glutamic acid, 15-19 mM HEPES, 71-75 mM imidazole, 25-35 mM D-glucose, 3-9 mM sodium azide, and 0.005 g/100 ml phenol red, in aqueous solution with a pH of 6.0 to 6.4 at 20 °C.

9. Protective solution according to claim 8, containing per 100 ml of aqueous solution 0.6 g glycine, 0.4 g L alanine, 0.2 g L-proline, 0.4 g L-serine, 1.0 g L-glutamic acid, 0.4 g HEPES-buffer, 0.6 g D-glucose, 0.5 g imidazole, 0.05 g sodium azide and 0.005 g phenol red.

10. A preparation containing the substances required according to any one of the preceding claims as solids.

11. A preparation according to claim 10 which is presented in the form of a tablet.

12. Fixative kit comprising:
at least one preparation containing the substances required according to any one of the preceding claims as solids; and
a further solution consisting of or containing acetone.

13. Fixation method for biological samples having the following steps:
incubating a biological sample with a protective solution according to one of claims 1 to 9; and
incubating the biological sample with a further solution consisting of or containing acetone.

14. A method according to claim 13, which includes a further step of embedding of the treated biological sample in paraffin.

15. A method according to claim 13 or claim 14, wherein incubation with the protective solution takes at least 4 hours.

16. A method according to claim 15, wherein incubation with the protective solution takes from 8 to 100 hours.

17. A method according to any one of claims 13 to 16, wherein incubation with the protective solution and/or with the further solution is carried out at a temperature of 2 °C to 10 °C.

18. A method according to claim 17, wherein incubation with the further solution takes 1 to 10 hours.

19. A method according to claim 18, wherein incubation with the further solution takes place in several steps with replacement of the further solution at each step.

## Patentansprüche

1. Protektionslösung zur Verwendung in einem Fixierungsverfahren für die Paraffinschnitttechnik, umfassend
(i) ausschließlich die Aminosäuren Glycin, L-Alanin, L-Prolin, L-Serin und L-Glutaminsäure, wobei jede Aminosäure in einer Konzentration von 10 bis 100 mM vorhanden ist,
(ii) mindestens eine Zuckerkomponente, wobei die mindestens eine Zuckerkomponente ausgewählt ist aus D-Glukose, D-Galaktose oder D-Mannose, und
(iii) Wasser,
wobei die Protektionslösung bei 20°C einen pH von 5,8 bis 6,8 aufweist.

2. Protektionslösung nach Anspruch 1, ferner umfassend
(iv) eine pH-puffernde Substanz und einen pH-Indikator und/oder
(v) ein Konservierungsmittel.

3. Protektionslösung nach Anspruch 1 oder 2, wobei der pH 6,0 bis 6,4 beträgt.

4. Protektionslösung nach Anspruch 2, die HEPES und/oder Imidazol als puffernde Substanz enthält.

5. Protektionslösung nach einem der Ansprüche 2 bis 4, wobei der pH-Indikator Phenolrot ist.

6. Protektionslösung nach einem der Ansprüche 2 bis 5, die Natriumazid als Konservierungsmittel enthält.

7. Protektionslösung nach einem der vorhergehenden Ansprüche, enthaltend 25-35 mM Glukose.

8. Protektionslösung nach Anspruch 7, zusammengesetzt aus 75-85 mM Glycin, 40-50 mM L-Alanin, 12-22 mM L-Prolin, 33-43 mM L-Serin, 63-73 mM L-Glutaminsäure, 15-19 mM HEPES, 71-75 mM Imidazol, 25-35 mM D-Glukose, 3-9 mM Natriumazid und 0,005 g/100 ml Phenolrot, in wässriger Lösung mit einem pH von 6,0 bis 6,4 bei 20 °C.

9. Protektionslösung nach Anspruch 8, enthaltend je 100 ml wässriger Lösung 0,6 g Glycin, 0,4 g L-Alanin, 0,2 g L-Prolin, 0,4 g L-Serin, 1,0 g L-Glutaminsäure, 0,4 g HEPES-Puffer, 0,6 g D-Glukose, 0,5 g Imidazol, 0,05 g Natriumazid und 0,005 g Phenolrot.

10. Zubereitung, die die nach einem der vorhergehenden Ansprüche erforderlichen Substanzen als Feststoffe enthält.

11. Zubereitung nach Anspruch 10, die in Form einer Tablette vorliegt.

12. Fixierungskit, umfassend:
mindestens eine Zubereitung, die die nach einem der vorhergehenden Ansprüche erforderlichen Substanzen als Feststoffe enthält; und
eine weitere Lösung, die aus Aceton besteht oder dieses enthält.

13. Fixierungsverfahren für biologische Proben mit den folgenden Schritten:
Inkubieren einer biologischen Probe mit einer Protektionslösung nach einem der Ansprüche 1 bis 9; und
Inkubieren der biologischen Probe mit einer weiteren Lösung, die aus Aceton besteht oder dieses enthält.

14. Verfahren nach Anspruch 13, das einen weiteren Schritt des Einbettens der behandelten biologischen Probe in Paraffin beinhaltet.

15. Verfahren nach Anspruch 13 oder 14, wobei die Inkubation mit der Protektionslösung mindestens 4 Stunden dauert.

16. Verfahen nach Anspruch 15, wobei die Inkubation mit der Protektionslösung 8 bis 100 Stunden dauert.

17. Verfahren nach einem der Ansprüche 13 bis 16, wobei die Inkubation mit der Protektionslösung und/oder mit der weiteren Lösung bei einer Temperatur von 2 °C bis 10 °C durchgeführt wird.

18. Verfahren nach Anspruch 17, wobei die Inkubation mit der weiteren Lösung 1 bis 10 Stunden dauert.

19. Verfahren nach Anspruch 18, wobei die Inkubation mit der weiteren Lösung in mehreren Schritten unter Austausch der weiteren Lösung bei jedem Schritt stattfindet.

## Revendications

1. Solution de protection destinée à être utilisée dans un procédé de fixation pour la technique de section en paraffine, qui comprend :
(i) exclusivement les acides aminés glycine, L-alanine, L-proline, L-sérine et acide L-glutamique, chaque acide aminé étant présent à une concentration de 10 à 100 mM,
(ii) au moins un composé sucre, le au moins un composé sucre étant choisi parmi le D-glucose, le D-galactose ou le D-mannose, et
(iii) de l'eau,
la solution de protection ayant un pH compris entre 5,8 et 6,8 à 20°C.

2. Solution de protection selon la revendication 1, comprenant en outre :
(iv) une substance tampon de pH et un indicateur de pH, et/ou
(v) un conservateur.

3. Solution de protection selon la revendication 1 ou 2, dans laquelle le pH est de 6,0 à 6,4.

4. Solution de protection selon la revendication 2, qui contient de l'HEPES et/ou de l'imidazol en tant qu'une substance tampon.

5. Solution de protection selon l'une quelconque des revendications 2 à 4, dans laquelle l'indicateur de pH est le rouge de phénol.

6. Solution de protection selon l'une quelconque des revendications 2 à 5, qui contient de l'azide de sodium en tant qu'un conservateur.

7. Solution de protection selon l'une quelconque des revendications précédentes, contenant du glucose 25 à 35 mM.

8. Solution de protection selon la revendication 7, composée de glycine 75 à 85 mM, de L-alanine 40 à 50 mM, de L-proline 12 à 22 mM, de L-sérine 33 à 43 mM, d'acide L-glutamique 63 à 73 mM, d'HEPES 15 à 19 mM, d'imidazole 71 à 75 mM, de D-glucose 25 à 35 mM, d'azide de sodium 3 à 9 mM, et de 0,005 g/100 mL de rouge de phénol dans une solution aqueuse ayant un pH de 6,0 à 6,4 à 20°C.

9. Solution de protection selon la revendication 8, contenant, pour 100 mL de solution aqueuse, 0,6 g de glycine, 0,4 g de L-alanine, 0,2 g de L-proline, 0,4 g de L-sérine 1,0 g d'acide L-glutamique, 0,4 g de tampon HEPES, 0,6 g de D-glucose, 0,5 g d'imidazole, 0,05 g d'azide de sodium et 0,005 g de rouge de phénol.

10. Préparation contenant les substances nécessaires selon l'une quelconque des revendications précédentes sous la forme de solides.

11. Préparation selon la revendication 10, qui est présentée sous la forme d'un comprimé.

12. Kit de fixation comprenant :
au moins une préparation contenant les substances nécessaires selon l'une quelconque des revendications précédentes sous la forme de solides ; et
une autre solution constituée par ou contenant de l'acétone.

13. Procédé de fixation d'échantillons biologiques qui comprend les étapes suivantes :
incubation d'un échantillon biologique avec une solution de protection selon l'une quelconque des revendications 1 à 9 ; et
incubation de l'échantillon biologique avec une autre solution constituée par ou contenant de l'acétone.

14. Procédé selon la revendication 13, qui comprend une étape supplémentaire consistant à intégrer l'échantillon biologique traité dans de la paraffine.

15. Procédé selon la revendication 13 ou la revendication 14, dans lequel l'incubation avec la solution de protection dure au moins 4 heures.

16. Procédé selon la revendication 15, dans lequel l'incubation avec la solution de protection dure de 8 à 100 heures.

17. Procédé selon l'une quelconque des revendications 13 à 16, dans lequel l'incubation avec la solution de protection et/ou avec la solution supplémentaire est réalisée à une température de 2°C à 10°C.

18. Procédé selon la revendication 17, dans lequel l'incubation avec la solution supplémentaire prend de 1 à 10 heures.

19. Procédé selon la revendication 18, dans lequel l'incubation avec la solution supplémentaire a lieu en plusieurs étapes avec le remplacement de la solution supplémentaire à chaque étape.
